# EUROPÄISCHE PATENTANMELDUNG

(11) **EP 4 607 713 A1**
(43) Veröffentlichungstag der Anmeldung: **27.08.2025**
(21) Anmeldenummer: 24159287.2
(22) Anmeldetag: 23.02.2024
(51) Int. Cl.: H01R 13/187, H01R 43/16, F16F 1/00, H01R 13/11

(54) **ELEKTRISCHES VERBINDUNGSELEMENT**

(71) Anmelder: Rosenberger Hochfrequenztechnik GmbH & Co. KG, 83413 Fridolfing (DE)
(72) Erfinder: Gruber, Andreas, 83413 Fridolfing (DE); Itzlinger, Jakob, 83413 Fridolfing (DE)
(74) Vertreter: Lorenz, Matthias

(57) **Zusammenfassung**

Die vorliegende Erfindung betrifft ein elektrisches Verbindungselement. Die vorliegende Erfindung betrifft ferner eine elektrische Verbindung. Die vorliegende Erfindung betrifft schließlich auch noch ein Verfahren zur Herstellung eines elektrischen Verbindungselements.

Ein elektrisches Verbindungselement (1) zum elektrischen Verbinden eines Kontaktelements (18) mit einem zugehörigen Gegenkontaktelement (19) weist ein metallisches Band (2) mit einer Mittenachse M auf, in dem entlang der Mittenachse M abwechselnd an einem ersten Seitenende S₁ des metallischen Bandes (2) jeweils erste Abschnitte (3) des metallischen Bandes (2) und an einem zweiten Seitenende S₂ des metallischen Bandes (2) jeweils zweite Abschnitte (4) des metallischen Bandes (2) ausgebildet sind. Jeder erste Abschnitt (3) ist jeweils mit den beiden nächst benachbarten zweiten Abschnitten (4) über jeweils einen dritten Abschnitt (5) des metallischen Bandes (2) verbunden. Die ersten Abschnitte (3) und die zweiten Abschnitte (4) sind jeweils um eine Rotationsachse Ri, R₂ gebogen, die jeweils parallel zur Mittenachse M verläuft. Die gebogenen ersten Abschnitte (3) sind jeweils zwischen den beiden nächst benachbarten gebogenen zweiten Abschnitten (4) angeordnet. Jeder erste Abschnitt (3) und jeder zweite Abschnitt (4) sind jeweils derart gebogen, um das Kontaktelement (18) zu kontaktieren. Die dritten Abschnitte (5) sind jeweils eingerichtet, das Gegenkontaktelement (19) zu kontaktieren.

## Beschreibung

### GEBIET DER ERFINDUNG

Die vorliegende Erfindung betrifft ein elektrisches Verbindungselement zum elektrischen Verbinden eines Kontaktelements mit einem zugehörigen Gegenkontaktelement.

Die Erfindung betrifft außerdem eine elektrische Verbindung.

Die Erfindung betrifft schließlich auch noch ein Verfahren zum Herstellen eines elektrischen Verbindungselements.

### TECHNISCHER HINTERGRUND

In einer steckbaren und wieder lösbaren Verbindung zur Übertragung von Daten und von elektrischer Energie sind elektrische Steckverbindungen aus einem elektrischen Steckverbinder und einem zugehörigen elektrischen Gegensteckverbinder bekannt. Im gesteckten Zustand der Steckverbindung kontaktieren Kontaktelemente des Steckverbinders zugehörige Gegenkontaktelemente des Gegensteckverbinders. Bei der Übertragung von elektrischer Energie und somit von hohen Strömen werden vorzugsweise starre Kontaktelemente und starre Gegenkontaktelemente mit jeweils einem ausreichend großen Querschnitt verwendet. Ein starres Kontaktelement kontaktiert ein starres Gegenkontaktelement üblicherweise nicht flächig, sondern punktförmig. Auch wird typischerweise zwischen einem starren Kontaktelement und einem starren Gegenkontaktelement aufgrund fehlender Elastizität kein Kontaktdruck erzeugt. Beides schmälert die Übertragung von hohen Strömen zwischen dem Kontaktelement und dem Gegenkontaktelement. Um diesen technischen Nachteil zu überwinden, ist zwischen dem starren Kontaktelement und dem starren Gegenkontaktelement ein elektrisches Verbindungselement mit einer ausreichend hohen Anzahl von elastisch ausgebildeten Kontaktierungsbereichen angeordnet.

Als ein elektrisches Verbindungselement für rotationssymmetrische oder flache Kontaktelemente bzw. Gegenkontaktelemente ist ein Kontaktblech bzw. eine Kontakthülse mit jeweils mehreren Kontaktlamellen bekannt. Eine Kontakthülse mit Kontaktlamellen ist beispielsweise in der EP 3 357 127 B1 offenbart. Derartige Kontaktlamellen sind üblicherweise lang ausgebildet und weisen einen kleinen elastischen Federbereich auf. Außerdem verlieren sie im Laufe der Zeit ihre Elastizität. Alternativ ist eine torusförmige Ringfeder als ein elektrisches Verbindungselement für rotationssymmetrische Kontaktelemente bzw. Gegenkontaktelemente im Einsatz, wie sie beispielsweise in der EP 2 387 113 B1 offenbart ist. Eine derartige torusförmige Kontaktfeder ist nachteilig mit zu hohen Herstellungskosten verbunden.

Dies ist ein Zustand, den es zu verbessern gilt.

### BESCHREIBUNG DER ERFINDUNG

Vor diesem Hintergrund liegt der vorliegenden Erfindung die Aufgabe zugrunde, ein elektrisches Verbindungselement zum elektrischen Verbinden eines Kontaktelements mit einem zugehörigen Gegenkontaktelement mit verbesserten elektrischen und mechanischen Eigenschaften und reduzierten Herstellungskosten zu schaffen.

Erfindungsgemäß wird diese Aufgabe durch ein elektrisches Verbindungselement mit den Merkmalen des Patentanspruchs 1 gelöst.

### Demgemäß ist vorgesehen:

Ein elektrisches Verbindungselement zum elektrischen Verbinden eines Kontaktelements mit einem zugehörigen Gegenkontaktelement aufweisend
- ein metallisches Band mit einer Mittenachse,
- wobei entlang der Mittenachse abwechselnd an einem ersten Seitenende des metallischen Bandes jeweils erste Abschnitte des metallischen Bandes und
- an einem zweiten Seitenende des metallischen Bandes jeweils zweite Abschnitte des metallischen Bandes ausgebildet sind,
- wobei jeder erste Abschnitt jeweils mit den beiden nächst benachbarten zweiten Abschnitten über jeweils einen dritten Abschnitt des metallischen Bandes verbunden ist,
- wobei die ersten Abschnitte und die zweiten Abschnitte jeweils um eine Rotationsachse gebogen sind, die jeweils parallel zur Mittenachse verläuft,
- wobei die gebogenen ersten Abschnitte jeweils zwischen den beiden nächst benachbarten gebogenen zweiten Abschnitten angeordnet sind,
- wobei jeder erste Abschnitt und jeder zweite Abschnitt jeweils derart gebogen sind, um das Kontaktelement zu kontaktieren, und
- die dritten Abschnitte jeweils eingerichtet sind, das Gegenkontaktelement zu kontaktieren.

Die der vorliegenden Erfindung zugrunde liegende Erkenntnis/Idee besteht darin, in einem ursprünglich planaren länglichen metallischen Band mit einer Mittenachse relativ zur Mittenachse abwechselnd an einem ersten Seitenende des metallischen Bandes erste Abschnitte des metallischen Bandes und an einem gegenüberliegenden zweiten Seitenende des metallischen Bandes zweite Abschnitte des metallischen Bandes auszubilden und jeden ersten Abschnitt über jeweils einen dritten Abschnitt des metallischen Bandes mit den beiden nächst benachbarten zweiten Abschnitten zu verbinden. Somit ist zwischen jedem ersten Abschnitt des metallischen Bandes und den jeweils nächst benachbarten zweiten Abschnitten des metallischen Bandes jeweils ein dritter Abschnitt des metallischen Bandes ausgebildet, der den jeweiligen ersten Abschnitt des metallischen Bandes mit einem der jeweiligen beiden nächst benachbarten zweiten Abschnitten des metallischen Bandes verbindet. Somit entsteht ein ursprünglich planares metallisches Band mit einer periodischen Form relativ zur Mittenachse, vorzugsweisen mit einer wellenförmigen Form relativ zur Mittenachse. Die ersten und die zweiten Abschnitte eines derart geformten metallischen Bandes sind schließlich jeweils um eine zur Mittenachse parallelen Rotationsachse derart gebogen, dass ein elektrisches Verbindungselement mit einer hülsen- oder röhrenförmigen Grundgeometrie entsteht, in dem jeder gebogene erste Abschnitt jeweils zwischen den beiden nächst benachbarten gebogenen zweiten Abschnitten angeordnet ist. Somit bilden die ersten und die zweiten Abschnitte des metallischen Bandes, welche jeweils im Wechsel an einer Mantelseite des hülsen- oder röhrenförmigen elektrischen Verbindungselements angeordnet sind, jeweils eine Kontaktierung zum Kontaktelement (vorzugsweise über zugehörige Kontaktpunkte). Die dritten Abschnitte des metallischen Bandes, welche jeweils an der gegenüberliegenden Mantelseite des hülsen- oder röhrenförmigen elektrischen Verbindungselements angeordnet sind, bilden eine Kontaktierung zum Gegenkontaktelement (vorzugsweise über zugehörige Kontaktpunkte).

Die gebogenen ersten und zweiten Abschnitte des metallischen Bandes, die jeweils über dazwischen befindliche Spalte voneinander getrennt sind, wirken jeweils als Federarme des elektrischen Verbindungselements und ermöglichen aufgrund der Elastizität der Federarme eine Kontaktierung des Kontaktelements mit einem ausreichenden Kontaktdruck. Die dritten Abschnitte des metallischen Bandes, die jeweils einen ersten und einen zweiten Abschnitt des metallischen Bandes verbinden, sind ebenfalls jeweils über dazwischen befindliche Spalte voneinander getrennt und weisen aufgrund ihrer Längserstreckung, welche vorzugsweise ein Vielfaches ihrer Quererstreckung aufweist, eine Elastizität auf, um das Gegenkontaktelement mit einem ausreichenden Kontaktdruck zu kontaktieren.

Aufgrund der Elastizität der ersten, der zweiten und der dritten Abschnitte des metallischen Bandes stellt sich flexibel in Abhängigkeit des Abstands zwischen dem Kontaktelement und dem Gegenkontaktelements ein entsprechender Abstand zwischen den Kontaktpunkten der ersten und der zweiten Abschnitte und den Kontaktpunkten der dritten Abschnitte des metallischen Bandes, d. h. ein entsprechender Durchmesser des hülsen- oder röhrenförmigen Querschnittprofils des elektrischen Verbindungselements, ein. Die Elastizität der federarmförmig ausgebildeten ersten und zweiten Abschnitte ist vorzugsweise höher als die Elastizität der dritten Abschnitte des metallischen Bandes ausgebildet. Somit erfolgt die Abstandsanpassung zwischen einerseits den Kontaktpunkten der ersten und der zweiten Abschnitte und andererseits den Kontaktpunkten der dritten Abschnitte des metallischen Bandes größtenteils durch ein elastisches Biegen der federarmförmig ausgebildeten ersten und zweiten Abschnitte des metallischen Bandes in Richtung der Kontaktpunkte der dritten Abschnitte. Aber auch die dritten Abschnitte des metallischen Bandes lassen sich in Richtung der Kontaktpunkte der ersten und der zweiten Abschnitte des metallischen Bandes biegen.

Vorzugsweise ist der Abstand zwischen dem Kontaktelement und dem zugehörigen Gegenkontaktelement konstant, so dass der Durchmesser des hülsen- oder röhrenförmigen Querschnittprofils des elektrischen Verbindungselements und somit der Abstand zwischen den Kontaktpunkten der ersten und der zweiten Abschnitte und den Kontaktpunkten der dritten Abschnitte des metallischen Bandes über die gesamte Längserstreckung des metallischen Bandes konstant ausgebildet ist. Alternativ lässt sich ein Abstand zwischen dem Kontaktpunkt jedes einzelnen ersten oder zweiten Abschnitts und den Kontaktpunkten der jeweils nächstbenachbarten dritten Abschnitte des metallischen Bandes aufgrund der individuellen Elastizität jedes einzelnen ersten, zweiten und dritten Abschnitts des metallischen Bandes jeweils individuell einstellen. Somit lässt sich im Fall von fertigungsbedingten Schwankungen der Kontaktflächen des Kontaktelements und des Gegenkontaktelements ein entlang der Längserstreckung des metallischen Bandes veränderlicher Abstand zwischen dem Kontaktelement und dem Gegenkontaktelement mit dem elektrischen Verbindungselement überbrücken.

Auch eine gestufte oder eine kontinuierliche Änderung an der Kontaktfläche des Kontaktelements und/oder an der Kontaktfläche des Gegenkontaktelements ohne eine Änderung des Abstands zwischen dem Kontaktelement und dem Gegenkontaktelement lässt sich mit dem elektrischen Verbindungselement überbrücken, da der Abstand zwischen dem Kontaktpunkt jedes einzelnen ersten oder jedes einzelnen zweiten Abschnitts gegenüber dem Kontaktpunkt des sich jeweils anschließenden dritten Abschnitts des metallischen Bandes veränderbar ist.

Dadurch, dass die gebogenen ersten Abschnitte des metallischen Bandes zwischen den gebogenen zweiten Abschnitten des metallischen Bandes angeordnet sind, ergibt sich ein elektrisches Verbindungselement, das bei gegebener Elastizität sowohl entlang der Längserstreckung des metallischen Bandes als auch entlang der hülsen- oder röhrenförmigen Querschnittserstreckung eine ausreichende mechanische Stabilität aufweist. Die ersten und die zweiten Abschnitte des metallischen Bandes, deren Längserstreckung jeweils in Steck- bzw. Löserichtung der Anordnung aus dem Kontaktelement und dem Gegenkontaktelement orientiert sind, stabilisieren sich bei einem Steck- oder Lösevorgang zwischen dem Kontaktelement und dem Gegenkontaktelement gegenseitig und werden vorteilhaft nicht in Richtung der Mittenachse des metallischen Bandes verschoben. Dieser vorteilhafte Effekt kann zusätzlich verstärkt werden, indem das elektrische Verbindungselement am Kontaktelement durch eine formschlüssige Fixierung der ersten und der zweiten Abschnitte des metallischen Bandes in einer Ausnehmung, vorzugsweise in einer Nut, des Kontaktelements erfolgt. Die dritten Abschnitte des metallischen Bandes bilden den Kontakt zum Gegenkontaktelement, der sich in einem Steck- oder Lösevorgang relativ zum Kontaktelement und somit relativ zum am Kontaktelement fixierten elektrischen Verbindungselement bewegt. Die dritten Abschnitte des metallischen Bandes, welche eine höhere Steifigkeit und somit eine höhere mechanische Stabilität als die ersten und die zweiten Abschnitte des metallischen Bandes aufweisen, können die bei einem Steck- oder Lösevorgang auftretenden Steck bzw. Lösekräfte vom elektrischen Verbindungselement besser als die ersten und die zweiten Abschnitte des metallischen Bandes auffangen.

Bei dem Kontaktelement und dem zugehörigen Gegenkontaktelement handelt es sich vorzugsweise jeweils um einen starren Körper aus einem Material mit einer hohen elektrischen Leitfähigkeit, vorzugsweise aus einem Metall, insbesondere aus Kupfer oder Aluminium, oder aus einer Metalllegierung.

Das Kontaktelement und das Gegenkontaktelement können jeweils als ein Flachkontakt, d. h. als ein Kontaktschwert und ein zugehöriges U-förmiges Kontaktelement ausgebildet sein. Das zugehörige elektrische Verbindungselement, das zwischen dem Kontaktelement und dem Gegenkontaktelement angeordnet ist und das Kontaktelement und das Gegenkontaktelement jeweils lateral kontaktiert, weist somit eine hülsen- oder röhrenförmige Grundgeometrie mit einer linear verlaufenden Mittenachse auf. Zur elektrischen Verbindung zwischen zwei Flachkontaktelementen ist aber auch ein elektrisches Verbindungselement mit einer kreisförmig verlaufenden Mittenachse, d. h. mit einer ring- oder torusförmigen Grundgeometrie, denkbar, dessen Längsachse senkrecht zu den Kontaktflächen der beiden Flachkontaktelemente orientiert ist.

Alternativ können das Kontaktelement und das Gegenkontaktelement jeweils als rotationssymmetrische Kontakte, d. h. als stiftförmige oder hülsenförmige Kontakte, ausgebildet sein.

Das zugehörige elektrische Verbindungselement, das zwischen dem Kontaktelement und dem Gegenkontaktelement angeordnet ist und das Kontaktelement und das Gegenkontaktelement jeweils radial kontaktiert, weist in diesem Fall eine hülsen- oder röhrenförmige Grundgeometrie mit einer kreisförmig verlaufenden Mittenachse, d. h. mit einer torusförmigen Grundgeometrie, auf. Denkbar sind aber auch noch andere Geometrien für das Kontaktelement und das zugehörige Gegenkontaktelement, beispielsweise eine konische Geometrie oder eine Geometrie mit einem quadratischen, rechteckförmigen, polygonalen oder elliptischen Querschnittsprofil.

Schließlich kann das elektrische Verbindungselement mit einer ring- oder torusförmigen Grundgeometrie auch ein Kontaktelement und ein zugehöriges Gegenkontaktelement mit jeweils einer hülsenförmigen Geometrie stirnseitig miteinander elektrisch verbinden.

Die ersten und die zweiten Abschnitte des metallischen Bandes, die in Verbindung mit den dritten Abschnitten des metallischen Bandes einen periodischen Verlauf des metallischen Bandes bilden, weisen vorzugsweise jeweils eine konstante Erstreckung in einer Richtung zur Mittenachse des metallischen Bandes auf. Somit sind die an den einzelnen ersten und zweiten Abschnitten des metallischen Bandes ausgebildeten Kontaktpunkte zur Kontaktierung des Kontaktelements und die an den einzelnen dritten Abschnitten des metallischen Bandes ausgebildeten Kontaktpunkte zur Kontaktierung des Gegenkontaktelements jeweils äquidistant voneinander beabstandet. Im Fall eines torusförmigen elektrischen Verbindungselements sind die einzelnen Kontaktpunkte jeweils in äquidistanten Winkelsegmenten voneinander beabstandet. In beiden Fällen ist eine gleichmäßig verteilte Übertragung von hohen Strömen zwischen dem Kontaktelement und dem Gegenkontaktelement verwirklicht, sofern es sich bei dem Kontaktelement und dem zugehörigen Gegenkontaktelement jeweils um ein Innenleiterkontaktelement handelt. Bilden das Kontaktelement und das zugehörige Gegenkontaktelement jeweils ein Außenleiterkontaktelement, so ist durch eine derartige technische Ausprägung eine gute Schirmdichtigkeit erzielbar.

Denkbar ist in einer weniger bevorzugten Ausprägung der Erfindung aber auch eine nicht konstante Erstreckung der einzelnen ersten, zweiten und dritten Abschnitte des metallischen Bandes und somit eine nicht konstante Beabstandung der Kontaktpunkte.

Die ersten und die zweiten Abschnitte des metallischen Bandes können jeweils relativ zu einer zugehörigen Rotationsachse um einen derart großen Biegewinkel gebogen sein, dass einerseits die einzelnen gebogenen ersten Abschnitte und die einzelnen gebogenen zweiten Abschnitte verschränkt zueinander angeordnet sind und andererseits eine weitestgehend geschlossene Mantelfläche der hülsen- oder röhrenförmige Grundgeometrie des elektrischen Verbindungselements ausgebildet ist. Vorzugsweise ist die Rotationsachse, um die die ersten Abschnitte des metallischen Bandes jeweils gebogen sind, jeweils unterschiedlich zur Rotationsachse, um die die zweiten Abschnitte des metallischen Bandes jeweils gebogen sind. Das Querschnittprofil der hülsen- oder röhrenförmige Grundgeometrie des elektrischen Verbindungselements ist in diesem Fall w-förmig geformt. Denkbar ist aber auch, dass die ersten Abschnitte des metallischen Bandes jeweils um mehrere Rotationsachsen und die zweiten Abschnitte des metallischen Bandes jeweils um mehrere andere Rotationsachsen gebogen sind, um ein elektrisches Verbindungselement mit einer komplexeren Querschnittsform zu erzielen.

Vorteilhafte Ausgestaltungen und Weiterbildungen ergeben sich aus den weiteren Unteransprüchen sowie aus der Beschreibung unter Bezugnahme auf die Figuren der Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die planare Ausformung des metallischen Bandes mit sich jeweils wiederholenden Sequenzen aus jeweils einem ersten Abschnitt, einem dritten Abschnitt, einem zweiten Abschnitt und einem dritten Abschnitt und die sich anschließende Biegung der ersten und der zweiten Abschnitte kann vorzugsweise mittels einer Stanz-Biegetechnik verwirklicht werden. Auf diese Weise lässt sich ein derartiges elektrisches Verbindungselement hochautomatisiert in einer hohen Stückzahl zu minimierten Fertigungskosten herstellen. Die Stanz-Biegetechnik ermöglicht auch eine einfache Anpassung an unterschiedliche Parameter wie Größe, Geometrie und/oder Material des zu fertigenden elektrischen Verbindungselements.

In einer weiteren vorzugsweisen Ausprägung der Erfindung kann das elektrische Verbindungselement zur elektrischen Verbindung zwischen einem rotationssymmetrisch ausgebildeten Kontaktelement und einem ebenfalls rotationssymmetrisch ausgebildeten Gegenkontaktelement verwirklicht sein. Hierzu kann die Mittenachse des metallischen Bandes vorzugsweise kreisförmig insbesondere relativ zu einer Längsachse des elektrischen Verbindungselements gebogen sein. Die ersten Abschnitte und die zweiten Abschnitte des metallischen Bandes können hierbei jeweils derartig gebogen sein, dass sie das Kontaktelement relativ zur Längsachse des elektrischen Verbindungselement radial nach außen kontaktieren. Die dritten Abschnitte des metallischen Bandes können jeweils eingerichtet sein, das Gegenkontaktelement relativ zur Längsachse des elektrischen Verbindungselements radial nach innen zu kontaktieren. Das elektrische Verbindungselement weist hierbei eine torusförmige Grundgeometrie auf. Eine radial nach innen gerichtete Kontaktierung bedeutet hierbei eine Kontaktierung in einer Richtung zur Längsachse, während eine radial nach außen gerichtete Kontaktierung eine Kontaktierung in einer Richtung weg von der Längsachse bedeutet.

Zum elektrischen Verbinden eines Kontaktelements, dessen Durchführung alternativ ein elliptisches, rechteckförmiges, quadratisches oder polygonales Querschnittsprofil aufweist, mit einem Gegenkontaktelement, dessen Querschnittsprofil konsequenterweise elliptisch, rechteckförmig, quadratisch oder polygonal ausgebildet ist, ist alternativ auch ein torusförmiges elektrisches Verbindungselement mit einem zur Längsachse des elektrischen Verbindungselements elliptisch, rechteckförmig, quadratisch oder polygonal ausgebildeten Innen- bzw. Außenquerschnittsprofil denkbar.

Die kreisförmig gebogene Mittenachse des metallischen Bandes kann insbesondere kreisförmig geschlossen ausgebildet sein. Hierzu kann ein erstes axiales Ende des metallischen Bandes vorzugsweise mit einem zweiten axialen Ende des metallischen Bandes vorzugsweise stoffschlüssig, beispielsweise mittels einer Schweißung oder einer Lötung, verbunden sein. Hierzu kann wenigstens ein Schweiß- oder wenigstens ein Lötpunkt eine ausreichende Verbindungsfestigkeit zwischen dem ersten axialen Ende und dem zweiten axialen Ende bewirken. Alternativ ist auch ein formschlüssiges Verbinden des ersten axialen Endes und des zweiten axialen Endes mittels beispielsweise Clinchen möglich.

In einer weniger bevorzugten Ausprägung der Erfindung kann die kreisförmig gebogene Mittenachse des metallischen Bandes auch nicht geschlossen ausgebildet sein. In diesem Fall kann das torusförmige elektrische Verbindungselement beispielsweise in einer passend ausgeformten kreisförmigen Nut des Kontaktelements derart eingefügt sein, dass die Mittenachse des metallischen Bandes eine kreisförmige Biegung erfährt. Das erste axiale Ende und das zweite axiale Ende des metallischen Bandes können in der kreisförmig ausgebildeten Nut derart zu liegen kommen, dass sie sich gegenseitig kontaktieren oder geringfügig zueinander beabstandet sind.

Damit die ersten Abschnitte und die zweiten Abschnitte des metallischen Bandes jeweils eine Kontaktierung des Kontaktelement verwirklichen können und die ersten und die zweiten Abschnitte des metallischen Bandes jeweils verschränkt zueinander angeordnet sind, können die ersten Abschnitte des metallischen Bandes jeweils in einer entgegengesetzten Drehrichtung als die zweiten Abschnitte des metallischen Bandes gebogen sein. Jeder erste Abschnitt des metallischen Bandes kann jeweils in einer Uhrzeigerrichtung, d. h. in einer Drehrichtung nach "rechts", gebogen sein, während jeder zweite Abschnitt des metallischen Bandes jeweils in einer Gegenuhrzeigerrichtung, d. h. in einer Drehrichtung nach "links", gebogen sein kann.

In einer bevorzugten Ausprägung der Erfindung kann das elektrische Verbindungselement eine torusförmige Grundgeometrie aufweisen. Die torusförmige Grundgeometrie des elektrischen Verbindungselements kann somit eine Radialkontaktierung oder alternativ eine Stirnkontaktierung mit dem Kontaktelement und dem Gegenkontaktelement ermöglichen. Die Kontaktflächen des elektrischen Verbindungselements sind somit sowohl in Richtung des Kontaktelements als auch in Richtung des Gegenkontaktelements bei gleichzeitig realisierter Elastizität verbessert. Außerdem kann die torusförmige Grundgeometrie des elektrischen Verbindungselements eine Stromübertragung über zwei Strompfade zwischen der kontaktelementseitigen und den gegenkontaktelementseitigen Kontaktflächen ermöglichen. Die Stromübertragungsfähigkeit zwischen dem Kontaktelement und dem Gegenkontaktelement ist somit bei gleichzeitig realisierter Elastizität ebenfalls verbessert. Die torusförmige Grundgeometrie des elektrischen Verbindungselements kann schließlich eine Elastizität in radialer Richtung, in axialer Richtung und in Umfangrichtung des elektrischen Verbindungselements ermöglichen.

Damit die gebogenen ersten Abschnitte des metallischen Bandes innerhalb der torusförmigen Grundgeometrie des elektrischen Verbindungselements verschränkt zu den gebogenen zweiten Abschnitten des metallischen Bandes anordenbar sein können, muss jeder erste Abschnitt des metallischen Bandes jeweils in den Zwischenbereich zwischen den beiden nächst benachbarten zweiten Abschnitten des metallischen Bandes und jeder zweite Abschnitt des metallischen Bandes jeweils in den Zwischenbereich zwischen den beiden nächst benachbarten ersten Abschnitten des metallischen Bandes einfügbar sein. Um dies zu verwirklichen, können in einer weiteren vorzugsweisen Ausprägung der Erfindung die Geometrie der zweiten Abschnitte des metallischen Bandes jeweils der Geometrie einer Ausnehmung zwischen den beiden nächst benachbarten ersten Abschnitten des metallischen Bandes, und die Geometrie der ersten Abschnitte des metallischen Bandes jeweils der Geometrie der Ausnehmung zwischen den beiden nächst benachbarten zweiten Abschnitten des metallischen Bandes entsprechen. Hierbei und im Folgenden wird die Ausnehmung zwischen zwei benachbarten ersten Abschnitten des metallischen Bandes als eine erste Ausnehmung und die Ausnehmung zwischen zwei benachbarten zweiten Abschnitten des metallischen Bandes als eine zweite Ausnehmung bezeichnet.

Um die verschränkte Anordnung der gebogenen ersten und zweiten Abschnitte des metallischen Bandes zu verwirklichen, kann als weitere Bedingung die Größe jedes ersten Abschnitts des metallischen Bandes zumindest geringfügig kleiner als die Größe einer zweiten Ausnehmung und die Größe jedes zweiten Abschnitts des metallischen Bandes zumindest geringfügig kleiner als die Größe einer ersten Ausnehmung ausgebildet sein.

Die Größe der ersten und der zweiten Abschnitte des metallischen Bandes, die Größe der ersten Ausnehmungen und die Größe der zweiten Ausnehmungen beziehen sich hierbei jeweils sowohl auf die Erstreckung in einer Richtung der Mittenachse des metallischen Bandes als auch auf die Erstreckung in einer Richtung quer zur Mittenachse des metallischen Bandes.

In einer weiteren vorzugsweisen Ausprägung der Erfindung können sich die Geometrie einer ersten Ausnehmung und einer zweiten Ausnehmung jeweils in Richtung der Mittenachse verjüngen. Eine derartige geometrische Ausformung des metallischen Bandes begünstigt einen wellenförmigen oder zickzackförmigen Verlauf des sich aus ersten Abschnitten, zweiten Abschnitten und dritten Abschnitten jeweils zusammensetzenden metallischen Bandes des elektrischen Verbindungelements.

In einer besonders vorzugsweisen Ausprägung der Erfindung können die ersten Ausnehmungen und die zweiten Ausnehmungen jeweils in eine schlitzförmige erste bzw. zweite Ausnehmung zwischen zwei dritten Abschnitten übergehen. Die schlitzförmigen ersten bzw. zweiten Ausnehmungen zwischen jeweils zwei dritten Abschnitten des metallischen Bandes ermöglichen vorteilhaft einen guten Kompromiss zwischen einer möglichst großen Kontaktfläche der dritten Abschnitte zum Gegenkontaktelement und einer notwendigen Mindestelastizität im Bereich der dritten Abschnitte des elektrischen Verbindungselements.

Die einzelnen schlitzförmigen Ausnehmungen können sich sogar über die dritten Abschnitte des metallischen Bandes bis in die ersten und zweiten Abschnitte des metallischen Bandes erstrecken. Auf diese Weise lässt sich eine Elastizität der ersten und der zweiten Abschnitte des metallischen Bandes zusätzlich erhöhen, um beispielsweise fertigungsbedingte Unebenheiten an der Innenmantelfläche des Kontaktelements vorteilhaft noch besser ausgleichen zu können.

Korrespondierend zur sich verjüngenden Geometrie der ersten und der zweiten Ausnehmung können sich die ersten Abschnitte und die zweiten Abschnitte des metallischen Bandes jeweils in Richtung zum jeweiligen Seitenende ebenfalls verjüngen.

Um die Elastizität des elektrischen Verbindungselements im Bereich der dritten Abschnitte des metallischen Bandes vorteilhaft zusätzlich zu erhöhen, kann eine Erstreckung der dritten Abschnitte jeweils in Richtung der Mittenachse zumindest abschnittsweise eingeengt sein. Die eingeschnürte Quererstreckung jedes dritten Abschnitts des metallischen Bandes bewirkt jeweils eine Erhöhung der Elastizität insbesondere in radialer Richtung des elektrischen Verbindungselements.

Zur bevorzugten punktförmigen Kontaktierung des Kontaktelements und des Gegenkontaktelements kann an den ersten Abschnitten, an den zweiten Abschnitten und an den dritten Abschnitten jeweils wenigstens ein Kontaktpunkt, vorzugsweise zwei Kontaktpunkte, ausgebildet sein. Um eine äquidistante Kontaktierung zum Kontaktelement und zum Gegenkontaktelement jeweils zu verwirklichen, können vorzugsweise in jedem ersten Abschnitt, in jedem zweiten Abschnitt und in jedem dritten Abschnitt des metallischen Bandes jeweils wenigstens ein Kontaktpunkt ausgebildet sein. Der Kontaktpunkt kann jeweils als eine Kontaktbeule oder als eine Kontakterhöhung ausgebildet sein, die vorzugsweise jeweils mittels Prägung herstellbar ist.

Im Fall einer Ausbildung von zwei Kontaktpunkten in den ersten Abschnitten, in den zweiten Abschnitten und/oder in den dritten Abschnitten des metallischen Bandes kann an jeder Seitenkante des ersten Abschnittes, des zweiten Abschnittes bzw. des dritten Abschnittes des metallischen Bandes jeweils ein Kontaktpunkt ausgebildet sein. Die Seitenkanten der ersten Abschnitte, der zweiten Abschnitte und/oder der dritten Abschnitte des metallischen Bandes können hierbei vorzugsweise gegenüber einem zwischen den Seitenkanten befindlichen Bereich der ersten Abschnitte, der zweiten Abschnitte und/oder der dritten Abschnitte jeweils gekröpft ausgebildet sein. Auf diese Weise sind die einzelnen Kontaktpunkte zusätzlich gegenüber den restlichen Flächenbereichen der ersten Abschnitte, der zweiten Abschnitte und/oder der dritten Abschnitte des metallischen Bandes erhöht ausgebildet und somit die Kontaktierung zwischen dem elektrischen Verbindungselement und dem Kontaktelement und dem Gegenkontaktelement in allen Kontaktpunkten jeweils zusätzlich erhöht und somit zusätzlich gesichert.

In einer alternativen Ausbildung eines Kontaktpunktes in einem dritten Abschnitt des metallischen Bandes kann an den beiden Flanken einer nutförmigen Einbuchtung des dritten Abschnitts des metallischen Bandes jeweils ein Kontaktpunkt ausgebildet sein. Die nutförmige Einbuchtung kann sich hierbei quer zur Längserstreckung des dritten Abschnitts zwischen den beiden Seitenkanten des dritten Abschnitts erstrecken. Die Kontaktpunkte können vorzugsweise auf einer Längsachse des jeweiligen dritten Abschnitts oder einer zur Längsachse parallelen Linie zu liegen kommen. Somit können auf diese Weise Kontaktpunkte jeweils an einem dritten Abschnitt des metallischen Bandes ausgebildet sein, die gegenüber den übrigen Bereichen des jeweiligen dritten Abschnittes erhöht ausgebildet sind und somit eine gesicherte Kontaktierung des Gegenkontaktelements bewirken.

Vorzugsweise sind die einzelnen Kontaktpunkte jeweils an identischen Positionen innerhalb der ersten, der zweiten und der dritten Abschnitte des metallischen Bandes auszubilden, um eine reguläre Verteilung der Kontaktpunkte innerhalb des elektrischen Verbindungselement zu verwirklichen. Denkbar ist aber auch jede beliebige andere lokale Anordnung eines Kontaktpunkts in den einzelnen ersten, zweiten und dritten Abschnitten des metallischen Bandes.

Von der Erfindung ist auch eine elektrische Verbindung mit abgedeckt, die einen elektrischen Verbinder und einen zugehörigen elektrischen Gegenverbinder aufweist. Der Verbinder weist ein Kontaktelement auf, das über ein erfindungsgemäßes elektrisches Verbindungselement mit einem Gegenkontaktelement des Gegenverbinders elektrisch verbunden ist. Die obig zum elektrischen Verbindungselement erläuterten technischen Ausprägungen, technischen Details, technischen Wirkungen und technischen Vorteile gelten äquivalent für die Anwendung des elektrischen Verbindungselements in der elektrischen Verbindung. Das elektrische Verbindungselement ist zwischen dem Kontaktelement und dem Gegenkontaktelement angeordnet. Die ersten Abschnitte und die zweiten Abschnitte des elektrischen Verbindungselements kontaktieren hierbei jeweils das Kontaktelement elektrisch und mechanisch und die dritten Abschnitte des elektrisches Verbindungselements kontaktieren jeweils das Gegenkontaktelement elektrisch und mechanisch. Das Kontaktelement und das Gegenkontaktelement können entweder jeweils ein Innenleiterkontaktelement oder jeweils ein Außenleiterkontaktelement sein.

Vorzugsweise kann es sich bei der elektrischen Verbindung aus einem elektrischen Verbinder und einem zugehörigen elektrischen Gegenverbinder um eine elektrische Steckverbindung aus einem elektrischen Steckverbinder und einem zugehörigen elektrischen Gegensteckverbinder handeln. Denkbar ist aber auch, dass das elektrische Verbindungselement ein als ein metallisches Grundgehäuse ausgebildetes Außenleiterkontaktelement und ein als ein metallischer Gehäusedeckel ausgebildetes Außenleitergegenkontaktelement jeweils elektrisch und mechanisch kontaktiert. Das Grundgehäuse wird hierbei ohne einen Steckvorgang mit dem Gehäusedeckel elektrisch und mechanisch verbunden.

In einer vorzugsweisen Ausprägung der elektrischen Verbindung sind das Kontaktelement und das zugehörige Gegenkontaktelement jeweils rotationssymmetrisch ausgebildet, d. h. das Kontaktelement ist buchsen- oder hülsenförmig und das Gegenkontaktelement ist stiftförmig ausgeformt. Das elektrische Verbindungselement weist somit eine torusförmige Grundgeometrie auf. Alternativ kann das Kontaktelement und das zugehörige Gegenkontaktelement jeweils als ein Flachkontakt ausgebildet sein. In diesem Fall weist das elektrische Verbindungselement eine lineare hülsenförmige Grundgeometrie auf. Schließlich kann ein metallischer Gehäusedeckel, der ein Au-ßenleitergegenkontaktelement der elektrischen Verbindung bildet, der Gehäusegeometrie eines metallischen Grundgehäuses folgen, das ein Außenleiterkontaktelement der elektrischen Verbindung bildet. Das torusförmige elektrische Verbindungselement passt sich hierbei der Gehäusegeometrie an.

Das elektrische Verbindungselement ist vorzugsweise in einer ringförmigen Aussparung des Kontaktelements eingefügt. Die Aussparung zur Aufnahme des elektrischen Verbindungselements kann vorzugsweise als eine ringförmige Nut an der Innenmantelfläche des Kontaktelements ausgebildet sein. Alternativ ist auch eine Kombination aus einer an der Innenmantelfläche des Kontaktelements ausgebildeten Schulter und wenigsten einer an der Innenmantelfläche des Kontaktelements ausgebildeten Rastlasche bzw. Rasthaken zur Aufnahme des elektrischen Verbindungselements denkbar. Das elektrische Verbindungselement ist vorzugsweise formschlüssig in der Aussparung des Kontaktelements fixiert. Eine kraftschlüssige oder eine stoffschlüssige Fixierung des elektrischen Verbindungselements am Kontaktelement ist in einer weniger bevorzugten Ausbildung auch denkbar. Die Fixierung des elektrischen Verbindungselements am Kontaktelement ermöglicht eine sichere elektrische Kontaktierung zwischen den einzelnen ersten und zweiten Abschnitten des metallischen Bandes des elektrischen Verbindungselements mit dem Kontaktelement. In einer weniger bevorzugten Ausprägung der Erfindung kann das elektrische Verbindungselement auch in einer ringförmigen Aussparung des Gegenkontaktelements eingefügt sein.

Die Erfindung deckt schließlich auch ein Verfahren zur Herstellung eines elektrischen Verbindungselements mit ab, welches ein Kontaktelement mit einem zugehörigen Gegenkontaktelement elektrisch verbindet. Das Verfahren weist zumindest die folgenden Verfahrensschritte auf:
- Bereitstellen eines gestanzten metallischen Bands mit einer Mittenachse, wobei entlang der Mittenachse abwechselnd an einem ersten Seitenende des metallischen Bandes jeweils erste Abschnitte des metallischen Bandes und an einem zweiten Seitenende des metallischen Bandes jeweils zweite Abschnitte des metallischen Bandes ausgebildet sind, wobei jeder erste Abschnitt jeweils mit den beiden nächst benachbarten zweiten Abschnitten über jeweils einen dritten Abschnitt des metallischen Bandes verbunden ist,
- Biegen der ersten Abschnitte und der zweiten Abschnitte jeweils um eine Rotationsachse, die jeweils parallel zur Mittenachse verläuft, so dass die gebogenen ersten Abschnitte jeweils zwischen den beiden nächst benachbarten gebogenen zweiten Abschnitten angeordnet sind, jeder gebogene erste Abschnitt und jeder gebogene zweite Abschnitt jeweils das Kontaktelement zu kontaktieren vermag und die dritten Abschnitte das Gegenkontaktelement jeweils zu kontaktieren vermögen, und
- stoff- oder formschlüssiges Verbinden eines ersten axialen Endes des metallischen Bandes mit einem zweiten axialen Ende des metallischen Bandes.

An dieser Stelle sei betont, dass die genannten Verfahrensschritte nicht unbedingt in der Reihenfolge durchgeführt werden müssen, in der sie erstmals beschrieben oder erwähnt sind. Es können daher beispielsweise einzelne Verfahrensschritte oder Gruppen von Verfahrensschritten untereinander austauschbar sein, wenn dies technisch nicht ausgeschlossen ist. Auch können Verfahrensschritte miteinander kombiniert, in separate Zwischenschritte aufgeteilt oder mit Zwischenschritten ergänzt werden. Das Verfahren ist mit den beschriebenen Verfahrensschritten auch nicht unbedingt abschließend beschrieben und kann mit weiteren, auch nicht genannten Verfahrensschritten ergänzt werden.

Die obig zum elektrischen Verbindungselement und zur elektrischen Verbindung jeweils erläuterten technischen Ausprägungen, technischen Details, technischen Wirkungen und technischen Vorteile gelten äquivalent für die Herstellung des elektrischen Verbindungselements.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1A: eine Darstellung eines planaren Stanzbildes des erfindungsgemäßen elektrischen Verbindungselements,
- Fig. 1B: eine Darstellung des vorgebogenen erfindungsgemäßen elektrischen Verbindungselements,
- Fig. 1C: eine isometrische Darstellung des final hergestellten erfindungsgemäßen elektrischen Verbindungselements,
- Fig. 1D: eine Draufsicht des final hergestellten erfindungsgemäßen elektrischen Verbindungselements,
- Fig. 1E: eine Seitendarstellung des final hergestellten erfindungsgemäßen elektrischen Verbindungselements,
- Fig. 1F: eine Teildarstellung des final hergestellten erfindungsgemäßen elektrischen Verbindungselements,
- Fig. 2A: eine Teildarstellung des erfindungsgemäßen elektrischen Verbindungselements mit der axialen Verbindung des metallischen Bandes,
- Fig. 2B: eine Teildarstellung des erfindungsgemäßen elektrischen Verbindungselements mit der Trägeranbindung,
- Fig. 3A: eine Darstellung einer ersten Ausbildung von Kontaktpunkten an ersten und zweiten Abschnitten des erfindungsgemäßen elektrischen Verbindungselements,
- Fig. 3B: eine Darstellung einer zweiten Ausbildung von Kontaktpunkten an ersten und zweiten Abschnitten des erfindungsgemäßen elektrischen Verbindungselements,
- Fig. 3C: eine Seitendarstellung von ersten und zweiten Abschnitten des erfindungsgemäßen elektrischen Verbindungselements mit Kontaktpunkten,
- Fig. 3D: eine Schnittdarstellung von ersten und zweiten Abschnitten des erfindungsgemäßen elektrischen Verbindungselements mit Kontaktpunkten,
- Fig. 3E: eine weitere Schnittdarstellung von ersten und zweiten Abschnitten des erfindungsgemäßen elektrischen Verbindungselements mit Kontaktpunkten und
- Fig. 3F: eine Darstellung einer ersten Ausbildung von Kontaktpunkten an dritten Abschnitten des erfindungsgemäßen elektrischen Verbindungselements,
- Fig. 3G: eine Schnittdarstellung einer ersten Ausbildung von Kontaktpunkten an dritten Abschnitten des erfindungsgemäßen elektrischen Verbindungselements,
- Fig. 3H: eine Darstellung einer zweiten Ausbildung von Kontaktpunkten an dritten Abschnitten des erfindungsgemäßen elektrischen Verbindungselements,
- Fig. 3I: eine Schnittdarstellung einer zweiten Ausbildung von Kontaktpunkten an dritten Abschnitten des erfindungsgemäßen elektrischen Verbindungselements,
- Fig. 4: eine Darstellung eines modifizierten planaren Stanzbildes des erfindungsgemäßen elektrischen Verbindungselements und
- Fig. 5: eine Darstellung einer erfindungsgemäßen elektrischen Verbindung.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Im Folgenden werden die Figuren zusammenhängend und übergreifend beschrieben.

### BESCHREIBUNG VON AUSFÜHRUNGSBEISPIELEN

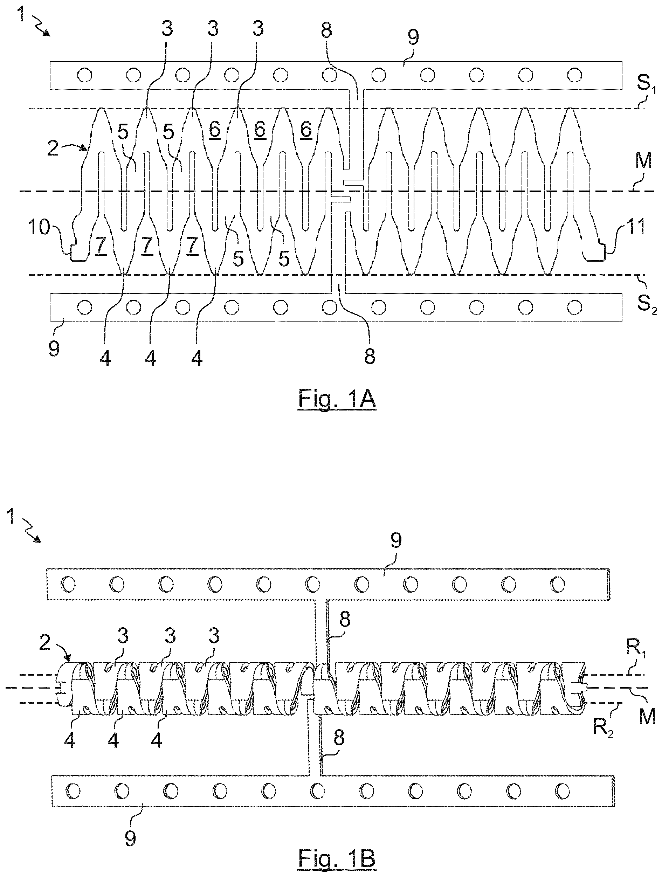

In den Figuren 1A bis 1C ist das elektrische Verbindungselement 1 jeweils in seinen einzelnen Fertigungsschritten dargestellt:
Aus Fig. 1A ergibt sich das planare Stanzbild des elektrischen Verbindungselements 1. Das metallische Band 2 des elektrischen Verbindungselements 1 weist entlang seiner Mittenachse M eine Längserstreckung und zwischen einem ersten Seitenende S₁ und einem zweiten Seitenende S₂ eine Quererstreckung auf. Das metallische Band 2 weist entlang seiner Mittenachse M einen periodischen oder wellenförmigen Verlauf mit ersten Abschnitten 3 am ersten Seitenende S₁, zweiten Abschnitten 4 am zweiten Seitenende S₂ und dritten Abschnitten 5 zwischen den ersten Abschnitten 3 und den zweiten Abschnitten 4. Jeder erste Abschnitt 3 des metallischen Bandes 2 ist hierbei über jeweils einen dritten Abschnitt 5 des metallischen Bandes 2 mit den nächsten benachbarten zweiten Abschnitten 4 des metallischen Bandes 2 verbunden. Die Geometrie einer ersten Ausnehmung 6 zwischen zwei aufeinanderfolgenden ersten Abschnitten 3 des metallischen Bandes 2 entspricht der Geometrie eines zweiten Abschnitts 4. Äquivalent entspricht eine zweite Ausnehmung 7 zwischen zwei aufeinanderfolgenden zweiten Abschnitten 4 des metallischen Bandes 2 der Geometrie eines ersten Abschnitts 3.

Somit sind nach dem Biegen der ersten Abschnitte 3 und der zweiten Abschnitte 4 des metallischen Bandes 2 gemäß Fig. 1B die ersten Abschnitte 3 und die zweiten Abschnitte 4 des metallischen Bandes 2 verschränkt zueinander angeordnet, d. h. zwischen zwei aufeinanderfolgenden ersten Abschnitten 3 ist jeweils ein zweiter Abschnitt 4 des metallischen Bandes 2 angeordnet. Die ersten Ausnehmungen 6 und die zweiten Ausnehmungen 7 verjüngen sich jeweils in Richtung der Mittenachse M und gehen in schlitzförmige erste Ausnehmungen 6 bzw. schlitzförmige zweite Ausnehmungen 7 über, welche jeweils aufeinanderfolgende dritte Abschnitte 5 des metallischen Bandes 2 voneinander trennen. Korrespondierend verjüngen sich die ersten Abschnitte 3 und die zweiten Abschnitte 4 des metallischen Bandes 2 in Richtung des ersten Seitenendes S₁ bzw. in Richtung des zweiten Seitenendes S₂.

Das metallische Band 2 ist in periodischen Abständen beidseitig der Mittenachse M jeweils über einen Verbindungsbereich 8 mit einem Trägerstreifen 9 verbunden.

Aus Fig. 1B geht ein elektrisches Verbindungselement 1 mit einem metallischen Band 2 hervor, dessen erste Abschnitte 3 und dessen zweite Abschnitte 4 jeweils um eine Rotationsachse R₁ bzw. R₂ gebogen sind, welche jeweils parallel zur Mittenachse M des metallischen Bandes 2 verläuft. Wie aus Fig. 1B zu erkennen ist, sind die ersten Abschnitte 3 im Wechsel verschränkt zu den zweiten Abschnitten 4 des metallischen Bandes 2 angeordnet.

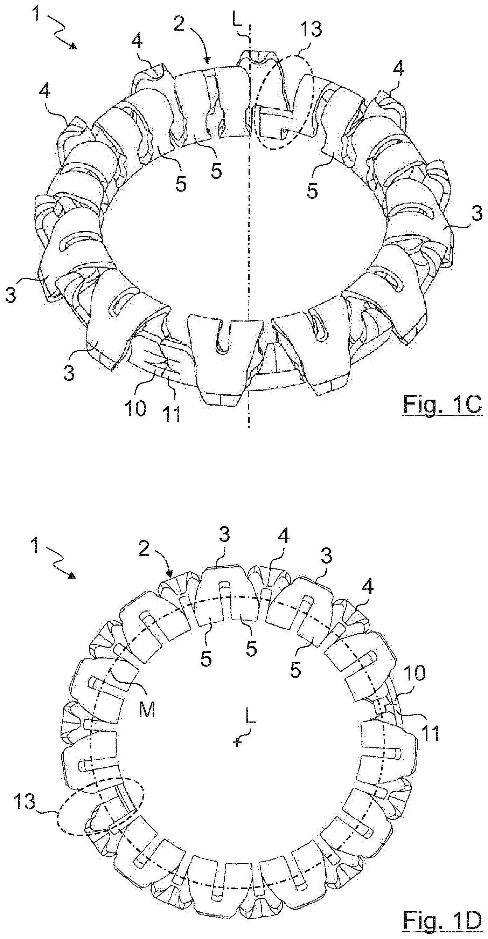

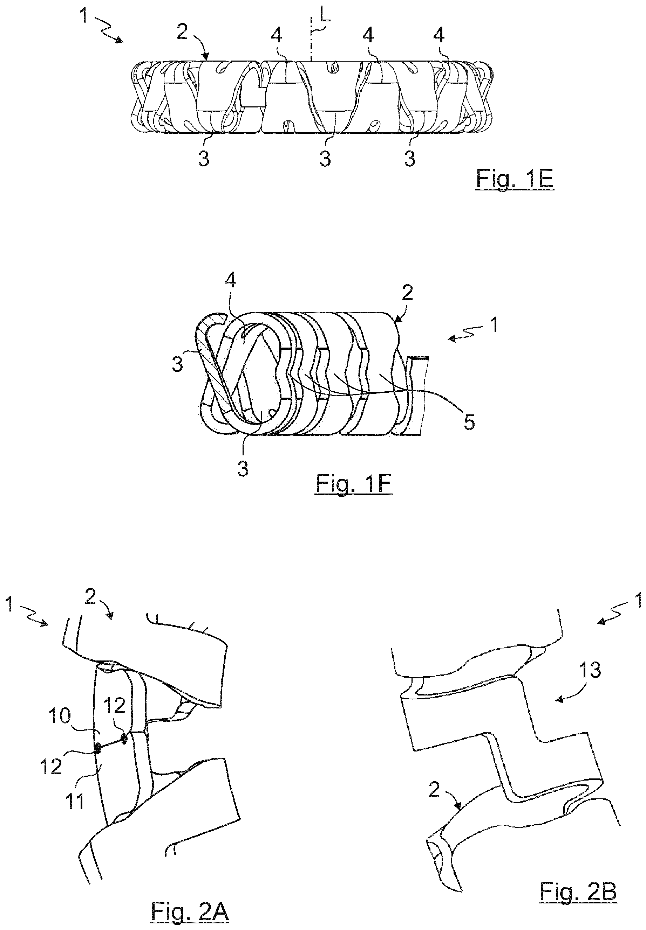

Schließlich wird das erste axiale Ende 10 des metallischen Bandes 2 mit dem zweiten axialen Ende 11 des metallischen Bandes 2 vorzugsweise mittels wenigstens eines Schweißpunktes 12, beispielsweise mittels zweier Schweißpunkte 12 wie in Fig. 2A dargestellt ist, verbunden. Auf diese Weise entsteht ein torusförmiges elektrisches Verbindungselement 1 mit einer Mittenachse M des metallischen Bandes 2, die relativ zu einer Längsachse L des elektrischen Verbindungselement 1 kreisförmig gebogen ist bzw. kreisförmig verläuft. Das somit final hergestellte elektrische Verbindungselement 1 ist in einer isometrischen Darstellung gemäß Fig. 1C und in einer Draufsicht in Richtung der Längsachse L gemäß Fig. 1D ersichtlich. Fig. 1E stellt schließlich eine Seitenansicht des elektrischen Verbindungselement 1 in radialer Richtung relativ zur Längsachse L dar.

Aus der Teilansicht des elektrischen Verbindungselements 1 in Fig. 1F ist die federarmförmige Ausbildung der ersten Abschnitte 3 und der zweiten Abschnitte 4 des metallischen Bandes 2 zu erkennen, die jeweils relativ zur Längsachse L eine radial nach außen wirkende Elastizität des elektrischen Verbindungselements 1 bilden. Die dritten Abschnitte 5 des metallischen Bandes, welche jeweils eine im Vergleich zu ihrer Längserstreckung deutlich geringere Quererstreckung aufweisen, bilden jeweils relativ zur Längsachse L eine radial nach innen wirkende Elastizität des elektrischen Verbindungselements 1.

Aus Fig. 2B geht schließlich der Anbindungsbereich 13 des metallischen Bandes 2 des elektrischen Verbindungselement 1 an die beiden Trägerstreifen 9 hervor. Im Anbindungsbereich 13 ist der Abstand zwischen zwei aufeinanderfolgenden ersten Abschnitten 3 und/oder der Abstand zwischen zwei aufeinanderfolgenden zweiten Abschnitten 4 des metallischen Bandes 2 jeweils gegenüber dem ansonsten konstanten Abstand zwischen jeweils zwei aufeinanderfolgenden ersten Abschnitten 3 bzw. zwischen zwei aufeinanderfolgenden zweiten Abschnitten 4 vergrößert.

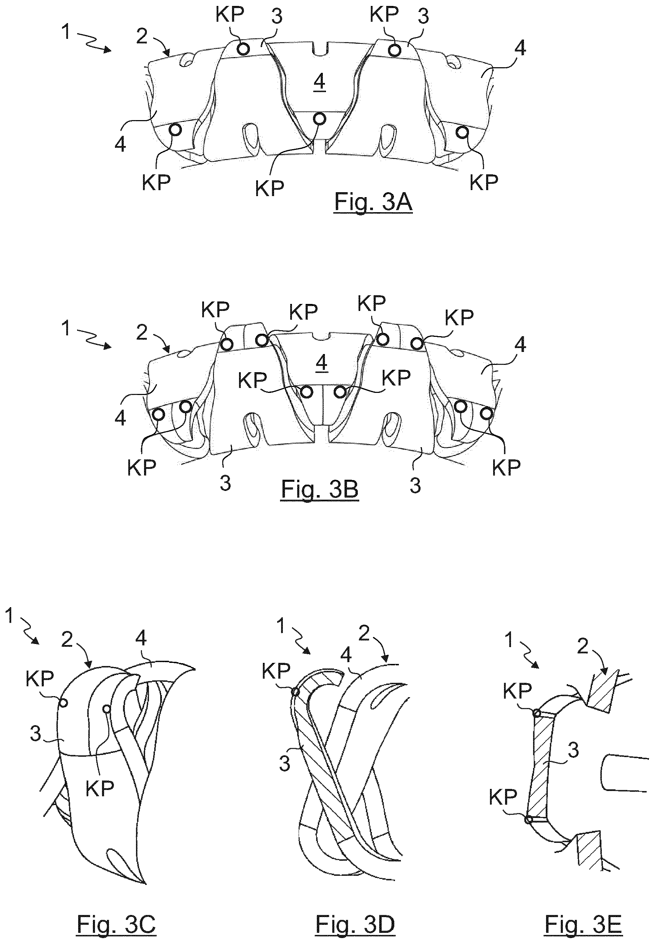

In Fig. 3A ist eine erste Ausbildung von Kontaktpunkten KP in den ersten Abschnitten 3 und in den zweiten Abschnitten 4 des metallischen Bandes 2 dargestellt. Hierbei ist im inneren Bereich jedes ersten Abschnitts 3 und jedes zweiten Abschnitts 4 des metallischen Bandes 2, vorzugsweise jeweils am spitz zulaufenden Seitenende S₁ und S₂ des metallischen Bandes 2, jeweils ein einziger Kontaktpunkt KP ausgebildet.

Aus der Fig. 3B ist eine zweite Ausbildung von Kontaktpunkten KP in den ersten Abschnitten 3 und in den zweiten Abschnitten 4 des metallischen Bandes 2 zu entnehmen. Hierbei sind in jedem ersten Abschnitt 3 und in jedem zweiten Abschnitt 4 jeweils zwei Kontaktpunkte KP ausgebildet. An jeder Seitenkante der gekröpft geformten ersten Abschnitte 3 und der gekröpft geformten zweiten Abschnitte 4 des metallischen Bandes 2 ist jeweils einer der beiden Kontaktpunkte KP ausgebildet. Die kröpfende Ausbildung der ersten Abschnitte 3 und der zweiten Abschnitte 4 des metallischen Bandes 2 ist in der Seitenansicht der ersten und der zweiten Abschnitte 3 und 4 gemäß Fig. 3C und in den beiden Schnittdarstellungen der ersten und der zweiten Abschnitte 3 und 4 des metallischen Bandes 2 gemäß der Figuren 3D und 3E deutlicher zu erkennen.

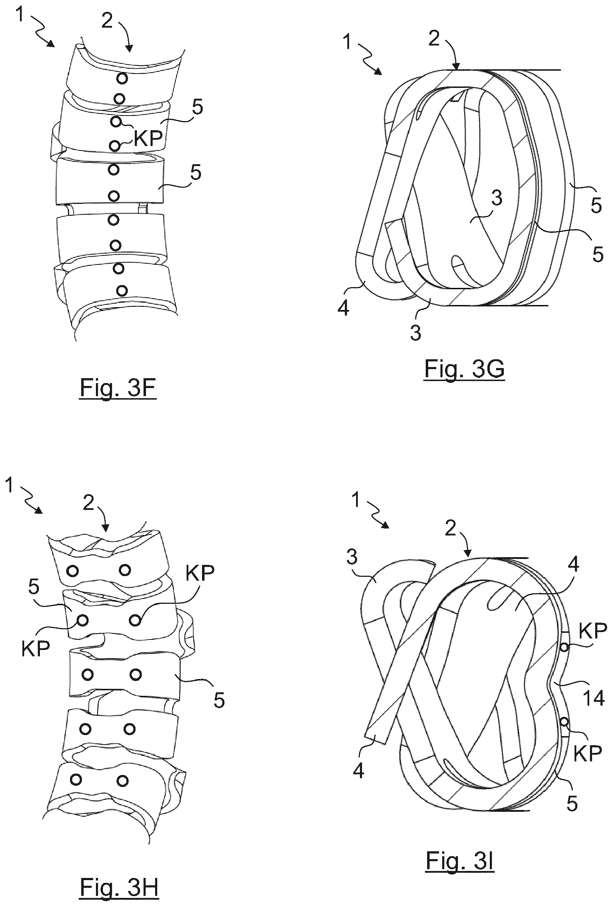

In den Figuren 3F und 3G ist eine erste Ausbildung von Kontaktpunkten KP an dritten Abschnitten 5 des metallischen Bandes 2 dargestellt. Hierbei sind in jedem dritten Abschnitt 5 jeweils zwei Kontaktpunkte KP ausgebildet, wobei an jeder Seitenkante des dritten Abschnitts 5 jeweils einer der beiden Kontaktpunkte KP positioniert ist.

Während die Quererstreckung der dritten Abschnitte 5 des metallischen Bandes 2 in den Darstellungen der Figuren 3F und 3G jeweils konstant über die gesamte Längserstreckung der einzelnen dritten Abschnitte 5 verwirklicht ist, ist die Quererstreckung der dritten Abschnitte 5 des metallischen Bandes 2 in den Darstellungen der Figuren 3H und 3I jeweils eingeschnürt, um eine größere Elastizität der dritten Abschnitte 5 zu erzielen. Außerdem ist in jedem dritten Abschnitt 5 des metallischen Bandes 2 in Richtung der Quererstreckung jeweils eine Einbuchtung 14, insbesondere eine nut- oder sickenförmige Einbuchtung 14, ausgebildet. An den beiden Flanken der nut- oder sickenförmigen Einbuchtung 14 der einzelnen dritten Abschnitte 5 des metallischen Bandes 2 ist jeweils einer von zwei Kontaktpunkten KP ausgebildet.

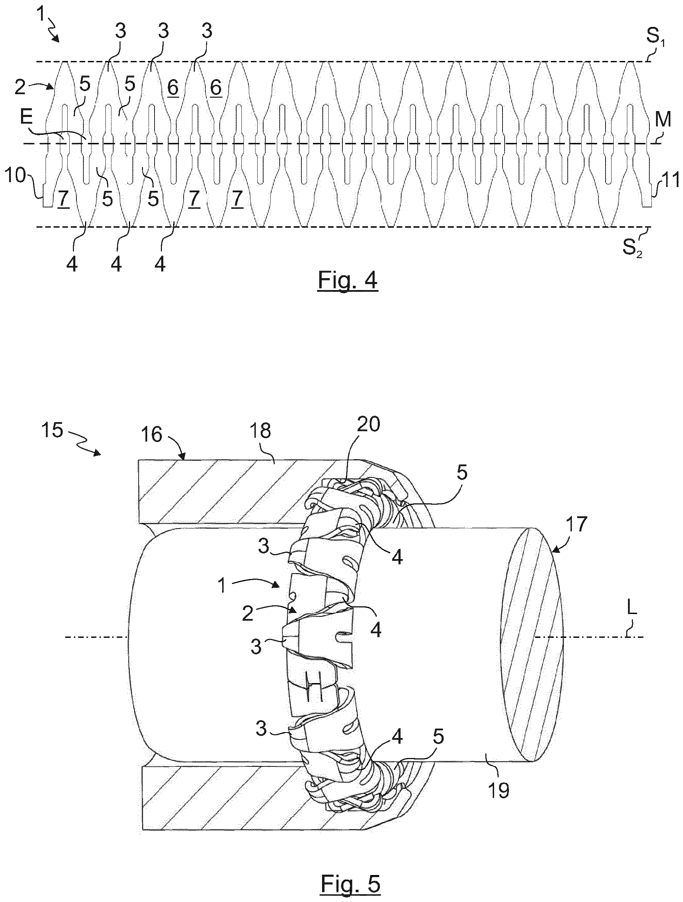

Während in Fig. 1A ein metallisches Band 2 dargestellt ist, das einerseits auf seine Verwendungslänge gelängt ist und andererseits über jeweils einen Verbindungsbereich 8 mit zwei Trägerstreifen 9 verbunden ist, ergibt sich aus Fig. 4 ein metallisches Band 2, das einerseits nicht an Trägerstreifen 9 angebunden ist und andererseits erst im Anschluss an den Stanzvorgang aus einer Meterware auf seine Verwendungslänge gelängt wird. Der Transport des metallischen Bandes 2 kann hierbei alternativ zum Trägerstreifen-Transport mittels mehrerer Dorne des Stanz-Biege-Automaten erfolgen, die jeweils in eine laterale Erweiterung E einer schlitzförmigen ersten Ausnehmung 6 bzw. einer schlitzförmigen zweiten Ausnehmung 7 im Bereich zwischen jeweils zwei benachbarten dritten Abschnitten 5 des metallischen Bandes 2 eingreifen.

Die Fig. 5 stellt schließlich eine elektrische Verbindung 15 aus einem elektrischen Verbinder 16 und einem zugehörigen elektrischen Gegenverbinder 17 dar. Die elektrische Verbindung 15 ist hierbei als eine elektrische Steckverbindung mit einem elektrischen Steckverbinder und einem zugehörigen elektrischen Gegensteckverbinder dargestellt. Der elektrische Verbinder 16 weist beispielsweise ein buchsenförmiges Kontaktelement 18 auf, das über das torusförmige elektrische Verbindungselement 1 mit einem beispielsweise stiftförmigen Gegenkontaktelement 19 des elektrischen Gegenverbinders 17 elektrisch und mechanisch verbunden ist. Das torusförmige elektrische Verbindungselement 1 ist in einer ringförmigen Aussparung 20 des Kontaktelements 18 eingefügt und mit diesem formschlüssig mechanisch verbunden.

Aus Fig. 5 ist zu erkennen, dass die ersten Abschnitte 3 und die zweiten Abschnitte 4 des metallischen Bandes 2 des torusförmigen elektrischen Verbindungselements 1 jeweils in äquidistanten Winkelsegmenten radial nach außen relativ zur Längsachse L des elektrischen Verbindungselements das Kontaktelement 18 kontaktieren. Die dritten Abschnitte 5 des metallischen Bandes 2 des torusförmigen elektrischen Verbindungselements 1 kontaktieren jeweils in äquidistanten Winkelsegmenten radial nach innen relativ zur Längsachse L des elektrischen Verbindungselement 1 das Gegenkontaktelement 19.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

## Patentansprüche

1. Elektrisches Verbindungselement (1) zum elektrischen Verbinden eines Kontaktelements (18) mit einem zugehörigen Gegenkontaktelement (19) aufweisend ein metallisches Band (2) mit einer Mittenachse M, wobei entlang der Mittenachse M abwechselnd an einem ersten Seitenende S₁ des metallischen Bandes (2) jeweils erste Abschnitte (3) des metallischen Bandes (2) und an einem zweiten Seitenende S₂ des metallischen Bandes (2) jeweils zweite Abschnitte (4) des metallischen Bandes (2) ausgebildet sind, wobei jeder erste Abschnitt (3) jeweils mit den beiden nächst benachbarten zweiten Abschnitten (4) über jeweils einen dritten Abschnitt (5) des metallischen Bandes (2) verbunden ist, wobei die ersten Abschnitte (3) und die zweiten Abschnitte (4) jeweils um eine Rotationsachse R₁, R₂ gebogen sind, die jeweils parallel zur Mittenachse M verläuft, wobei die gebogenen ersten Abschnitte (3) jeweils zwischen den beiden nächst benachbarten gebogenen zweiten Abschnitten (4) angeordnet sind, wobei jeder erste Abschnitt (3) und jeder zweite Abschnitt (4) jeweils derart gebogen sind, um das Kontaktelement (18) zu kontaktieren, und die dritten Abschnitte (5) jeweils eingerichtet sind, das Gegenkontaktelement (19) zu kontaktieren.

2. Elektrisches Verbindungselement (1) nach Anspruch 1,
**dadurch gekennzeichnet,**
**dass** das elektrische Verbindungselement (1) als ein StanzBiegeteil hergestellt ist.

3. Elektrisches Verbindungselement (1) nach Anspruch 1 oder 2, **dadurch gekennzeichnet,**
**dass** die Mittenachse M relativ zu einer Längsachse L des elektrischen Verbindungselements (1) kreisförmig gebogen ist, wobei das elektrische Verbindungselement (1) eingerichtet ist, das Kontaktelement (18) relativ zur Längsachse L radial nach außen und das Gegenkontaktelement (19) relativ zur Längsachse L radial nach innen zu kontaktieren, wobei vorzugsweise jeder erste Abschnitt (3) und jeder zweite Abschnitt (4) jeweils derart gebogen sind, um jeweils das Kontaktelement (18) radial nach außen zu kontaktieren, und die dritten Abschnitte (5) jeweils eingerichtet sind, das Gegenkontaktelement (19) radial nach innen zu kontaktieren.

4. Elektrisches Verbindungselement (1) nach Anspruch 3,
**dadurch gekennzeichnet,**
**dass** das metallische Band (2) entlang der Mittenachse M kreisförmig geschlossen ist.

5. Elektrisches Verbindungselement (1) nach Anspruch 4,
**dadurch gekennzeichnet,**
**dass** das metallische Band (2) ein erstes axiales Ende (10) und ein mit dem ersten axialen Ende (10) verbundenes zweites axiales Ende (11) aufweist.

6. Elektrisches Verbindungselement (1) nach einem Ansprüche 1 bis 5,
**dadurch gekennzeichnet,**
**dass** die ersten Abschnitte (3) in einer entgegengesetzten Drehrichtung als die zweiten Abschnitte (4) gebogen sind.

7. Elektrisches Verbindungselement (1) nach einem Ansprüche 1 bis 6,
**dadurch gekennzeichnet,**
**dass** das elektrische Verbindungselement (1) eine torusförmige Grundgeometrie aufweist.

8. Elektrisches Verbindungselement (1) nach einem der Ansprüche 1 bis 7,
**dadurch gekennzeichnet,**
**dass** eine Geometrie der zweiten Abschnitte (4) der Geometrie einer ersten Ausnehmung (6) zwischen zwei benachbarten ersten Abschnitten (3) und die Geometrie der ersten Abschnitte (3) der Geometrie einer zweiten Ausnehmung (7) zwischen zwei benachbarten zweiten Abschnitten (4) entsprechen.

9. Elektrisches Verbindungselement (1) nach einem der Ansprüche 1 bis 8,
**dadurch gekennzeichnet,**
**dass** sich die Geometrie der ersten Ausnehmung (6) und der zweiten Ausnehmung (7) jeweils in einer Richtung zur Mittenachse M verjüngt und sich jeweils vorzugsweise schlitzförmig zwischen zwei dritten Abschnitten (5) verjüngt.

10. Elektrisches Verbindungselement (1) nach einem der Ansprüche 1 bis 9,
**dadurch gekennzeichnet,**
**dass** eine Erstreckung der dritten Abschnitte (5) in einer Richtung parallel zur Mittenachse M zumindest abschnittsweise eingeengt ist.

11. Elektrisches Verbindungselement (1) nach einem Ansprüche 1 bis 10,
**dadurch gekennzeichnet,**
**dass** an den ersten Abschnitten (3), an den zweiten Abschnitten (4) und an den dritten Abschnitten (5) jeweils wenigstens ein Kontaktpunkt (KP), vorzugsweise zwei Kontaktpunkte (KP), ausgebildet sind.

12. Elektrisches Verbindungselement (1) nach Anspruch 11,
**dadurch gekennzeichnet,**
**dass** an Seitenkanten der ersten Abschnitte (3), der zweiten Abschnitte (4) und/oder der dritten Abschnitte (5) jeweils ein Kontaktpunkt (KP) ausgebildet ist, wobei die Seitenkanten gegenüber einem zwischen den Seitenkanten befindlichen Bereich der ersten Abschnitte (3), der zweiten Abschnitte (4) und/oder der dritten Abschnitte (5) jeweils vorzugsweise gekröpft ausgebildet sind.

13. Elektrisches Verbindungselement (1) nach Anspruch 11,
**dadurch gekennzeichnet,**
**dass** an den dritten Abschnitten (5) jeweils eine Einbuchtung (14) ausgebildet ist, an deren Flanken jeweils die beiden Kontaktpunkte (KP) ausgebildet sind, wobei die beiden Kontaktpunkte (KP) jeweils vorzugsweise auf einer zur Längserstreckung der dritten Abschnitte (5) parallelen Linie zu liegen kommen.

14. Elektrische Verbindung (15) aufweisend einen elektrischen Verbinder (16) und einen zugehörigen elektrischen Gegenverbinder (17), wobei der Verbinder (16) ein Kontaktelement (18) und der Verbinder (17) ein zugehöriges Gegenkontaktelement (19) aufweisen, wobei zwischen dem Kontaktelement (18) und dem Gegenkontaktelement (19) ein elektrisches Verbindungselement (1) gemäß einem der Ansprüche 1 bis 13 angeordnet ist, wobei die ersten Abschnitte (3) und die zweiten Abschnitte (4) des elektrisches Verbindungselements (1) das Kontaktelement (18) und die dritten Abschnitte (5) des elektrisches Verbindungselements (1) das Gegenkontaktelement (19) jeweils elektrisch und mechanisch kontaktieren.

15. Verfahren zur Herstellung eines elektrischen Verbindungselements zum elektrischen Verbinden eines Kontaktelements (18) mit einem zugehörigen Gegenkontaktelement (19) aufweisend zumindest die folgenden Verfahrensschritte:
- Bereitstellen eines gestanzten metallischen Bands (2) mit einer Mittenachse M, wobei entlang der Mittenachse M abwechselnd an einem ersten Seitenende S₁ des metallischen Bandes (2) jeweils erste Abschnitte (3) des metallischen Bandes (2) und an einem zweiten Seitenende S₂ des metallischen Bandes (2) jeweils zweite Abschnitte (4) des metallischen Bandes (2) ausgebildet sind, wobei jeder erste Abschnitt (3) jeweils mit den beiden nächst benachbarten zweiten Abschnitten (4) über jeweils einen dritten Abschnitt (5) des metallischen Bandes (2) verbunden ist,
- Biegen der ersten Abschnitte (3) und der zweiten Abschnitte (4) jeweils um eine Rotationsachse R₁, R₂, die jeweils parallel zur Mittenachse M verläuft, so dass die gebogenen ersten Abschnitte (3) jeweils zwischen den beiden nächst benachbarten gebogenen zweiten Abschnitten (4) angeordnet sind, jeder gebogene erste Abschnitt (3) und jeder gebogene zweite Abschnitt (4) jeweils das Kontaktelement (18) zu kontaktieren vermag und die dritten Abschnitte (5) das Gegenkontaktelement (19) jeweils zu kontaktieren vermögen, und
- stoff- oder formschlüssiges Verbinden eines ersten axialen Endes (10) des metallischen Bandes (2) mit einem zweiten axialen Ende (11) des metallischen Bandes (2).
